# EUROPÄISCHE PATENTANMELDUNG

(11) **EP 0 782 998 A1**
(43) Veröffentlichungstag der Anmeldung: **09.07.1997**
(21) Anmeldenummer: 96120951.7
(22) Anmeldetag: 27.12.1996
(51) Int. Cl.: C07F 13/00, C11D 3/39, B01J 31/18

(54) **Bis- und Tris-(mu-oxo)-di-Mangan-Komplexsalze, deren Herstellung und deren Verwendung**

(30) Priorität: 04.01.1996 DE 19600161
(71) Anmelder: HOECHST AKTIENGESELLSCHAFT, 65929 Frankfurt am Main (DE)
(72) Erfinder: Tafesh, Ahmed, Dr., 78413 Corpus Christi, Texas (US); Beller, Matthias, Prof. Dr., 85747 Garching (DE); Fischer, Richard, Walter Dr., 65812 Bad Soden (DE); Scharbert, Bernd, Dr., 65934 Frankfurt (DE)

(57) **Zusammenfassung**

Bis- und Tris-(µ-oxo)-di-Mangan-Komplexsalze der Formel I

[LMn(µ-O)ₐ(µ-OAc)_{b}MnL]^{x}A_{y} (I)

worin
- Ac: eine C₂-C₈-Acylgruppe ist,
- a: ist 1, 2 oder 3,
- b: ist 0, wenn a 2 oder 3 ist oder b ist 2, wenn a 1 ist,
- x: bezeichnet die Anzahl der positiven Ladungen und ist 2 oder 3,
- A: ist ein Anion,
- y: bedeutet die für den Ausgleich der positiven Ladungen erforderliche equivalente Menge an Anion A und
- L: bedeutet einen Ligand, vorzugsweise [N,N-bis(2-pyridyl(methyl-)N-methylamin oder [N,N,N',N'-tetrakis-(2-pyridylmethyl-)1,2-ethylendiamin. Diese Komplexsalze eignen sich als Katalysatoren für die Oxidation organischer Verbindungen und als Katalysatoren bei oxidativen Bleichmitteln.

## Beschreibung

Es sind bereits eine Reihe von Bis- und Tris-(µ-oxo-di-Mangan-Komplexsalzen vorbeschrieben, so beispielsweise in WO 93/25562, Inorg. Chem. 1989, 28, p. 3606-3608; J. chem. Soc. Chem. Comm. 1995, p. 949-950; Inorg. Chem. 1994, 33, 4105-4111 und Nature, Vol. 369, p. 637 - 639.Mangan-Komplexsalze dieser Art sind außerdem in EP-A-0 458 397; EP-A-0 458 398 und EP-A-0 544 519 beschrieben. Diese Mangan-Komplexsalze, die als Katalysatoren für oxidative Bleichmittel dienen, enthalten einen Liganden vom Triazacyclononan-Typ, der jedoch nur in einem mehrstufigen komplizierten Prozeß hergestellt werden kann und somit schwer zugänglich ist. Es wurden nun weitere, bisher nicht beschriebene, Mangan-Komplexsalze gefunden, die sich ebenfalls sehr gut als Katalysatoren für Oxidationen, insbesondere als Katalysatoren für oxidative Bleichmittel, eignen, die aber überraschenderweise leichter zugängliche Liganden enthalten, was einen deutlichen technischen Vorteil verspricht.

Gegenstand der Erfindung sind neue Bis- und/oder Tris-(µ-oxo)-di-Mangan-Komplexsalze der Formel I

[LMn(µ-O)ₐ(µ-OAc)_{b}MnL]^{x}A_{y} (I)

worin
- Ac: eine C₂-C₈-Acylgruppe ist,
- a: ist 1, 2 oder 3,
- b: ist 0, wenn a 2 oder 3 ist oder b ist 2, wenn a 1 ist,
- x: bezeichnet die Anzahl der positiven Ladungen und ist 2 oder 3,
- A: ist ein ein- oder zweifach negativ geladenes Anion,
- y: bedeutet die für den Ausgleich der positiven Ladungen erforderliche equivalente Menge an Anion A und
- L: bedeutet einen Liganden der Formel II oder III 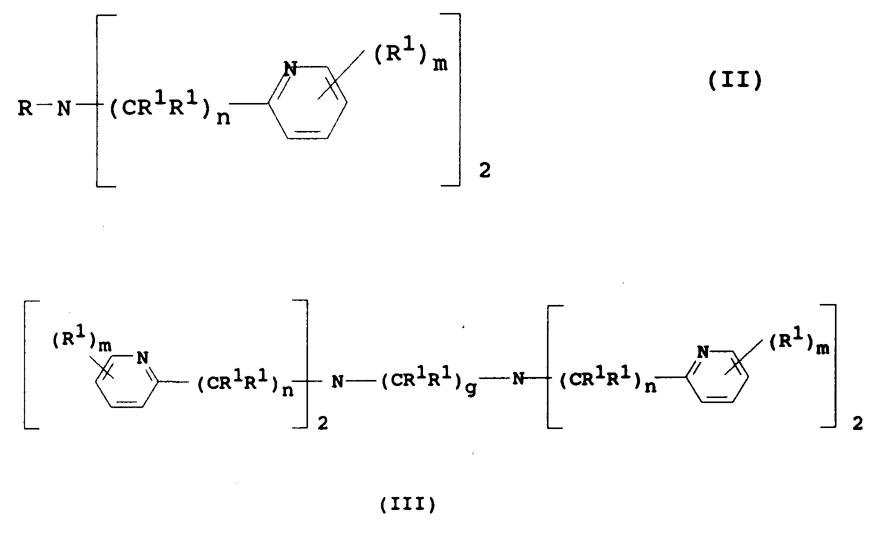
worin R C₁-C₁₂-Alkyl, C₅-C₁₀-Cycloalkyl, Phenyl, NH₂, NHR², N(R²)₂, OH, OR² oder COOH, R¹ Wasserstoff, C₁-C₁₂-Alkyl, C₅-C₁₀-Cycloalkyl, NH₂, NHR², (N(R²)₂, OH, OR², COOH, COOR², Cl, Br, F, J oder CN, R² C₁-C₁₂-Alkyl oder C₅-C₁₀-Cycloalkyl bedeuten, g 2 oder 3 und m und n Null oder eine ganze Zahl von 1 bis 4 ist.

Bevorzugt sind Liganden der Formeln I und II, bei denen alle Substituenten R¹ Wasserstoff bedeuten und n = 1 ist. Für den Fall a = 3 und b = 0 ist L vorzugsweise ein Ligand der Formel II. Bevorzugt sind auch Komplexsalze der Formel I, worin a = 1 und b = 2 ist und L einen Liganden der Formel III bedeutet. Bei Verbindungen der Formel I, worin L einen Liganden der Formel II bedeutet, ist R vorzugsweise C₁-C₄-Alkyl, insbesondere Methyl. Als Anion A kommen in Frage F⁻, Cl⁻, Br⁻, J⁻, NO₃⁻, ClO₄⁻, NCS⁻, PF₆⁻, RSO₃⁻, RSO₄⁻, SO₄²⁻, BPh₄⁻, sowie Anionen von aliphatischen und aromatischen Alkoholen sowie aliphatischen und aromatischen Carbonsäuren (Streitweiser & Heathcock, Introduction to Organic Chemistry, 1976, Chapter 17, App. IV). Bevorzugte Anionen sind PF₆⁻, ClO₄⁻, Tosylat, Acetat und Benzoat.

Die Herstellung der in den erfindungsgemäßen Mangan-Komplexslazen enthaltenen Liganden der Formel III erfolgt beispielsweise durch Umsetzung von 2-(Chlormethyl)pyridiniumchlorid mit Ethylendiamin in Gegenwart eines Phasentransferkatalysators (s. Synthesis, June 1992, p. 539-540) bzw. in analoger Weise für die substituierten anderen Liganden der Formel III. In gleicher Weise werden die Liganden der Formel II hergestellt durch Umsetzung von 2-(Chlormethyl)pyridiniumchlorid bzw. von analogen Pyridiniumverbindungen mit einem Amin R-NH₂. Die Herstellung der erfindungsgemäßen Mangan-Komplexsalze der Formel I erfolgt entsprechend den Angaben in Inorg. Chem. 1989, 28, 3606-3608, indem man eine wäßrige Lösung, die MnCl₂ und den Liganden enthält, mit H₂O₂ oxidiert oder analog zu dem in Inorg. Chem. 1994, 33, 4105-4111 beschriebenen Verfahren, bei dem die Oxidation mit Ammoniumperoxodisulfat vorgenommen wird.

Die Erfindung beinhaltet ein Verfahren zur Herstellung eines Salzes der Formel I kann das Oxidieren einer Lösung beinhalten, die Mn²⁺ und L enthält. Das Oxidieren kann mit einem Peroxid oder Peroxidsulfat erfolgen, wobei das Peroxid H₂O₂ sein kann und das Peroxidsulfat Ammoniumperoxidsulfat. Die Lösung kann eine wässrige Lösung sein und das Mn²⁺ kann in der Form von MnAy, wie z.B. MnCl₂, vorliegen.

Die so erhaltenen Mangan-Komplexsalze der Formel I können erfindungsgemäß als Katalysatoren für die Oxidaton von organischen Verbindungen eingesetzt werden, insbesondere für die Oxidaton von olefinischen Doppelbindungen und als Katalysatoren für oxidative Bleichen.

### Beispiel 1

### Tris-(µ-oxo)bis[N,N-bis(2-pyridylmethyl-)N-methylamin]dimangan IV hexafluorophosphat

1,74 g (8,8 mmol) MnCl₂·4H₂O, 1,88 g (8,8 mmol) N,N-bis-(2-pyridylmethyl)-N-methylamin und 1,75 g (9,5 mmol) KPF₆ wurden in 600 ml einer Mischung aus Ethanol und Wasser (2:1) gelöst. Die Lösung wurde 20 Min. bei Raumtemperatur gerührt und dann im Eisbad auf 5°C gekühlt. Dann wurden 10 ml H₂O₂ (3 %ig) und 2,6 ml einer 20 %igen wäßrigen NaOH-Lösung zugegeben, wobei die Temperatur auf 10°C anstieg und ein Niederschlag ausfiel. Diese Mischung wurde 1 Stunde lang bei 5°C und eine weitere Stunde bei 20°C gerührt. Der Niederschlag wurde abfiltriert und mit Wasser gewaschen. Rohausbeute 6,1 g. Nach dem Trocknen wurde der Feststoff mit Aceton behandelt, wobei MnO₂ als Feststoff zurückblieb. Die Acetonlösung wurde vom unlöslichen MnO₂ abfiltriert und das Aceton abdestilliert. Man erhielt 1,25 g eines grau-grünen Feststoffs.

| | | | | |
|---|---|---|---|---|
| Analyse: | ber.: | C 40,9 % | H 3,8 % | N 10,9 % |
| | gef.: | C 35,0 % | H 3,6 % | N 9,42 % |

### Beispiel 2

### Tris-(µ-oxo)bis[N,N,N',N'-tetrakis(2-pyridylmethyl-)1,2-ethylendiamin]dimangan IV,IV-hexafluorophosphat

Eine Mischung aus 25,5 ml Ethanol und 4,5 ml Wasser wurde durch dreimaliges Anlegen eines Vakuums entgast und mit Argon behandelt, um alle Reste an Sauerstoff zu entfernen, die sonst eine Oxidation von MnII zu MnIV bewirken würden. Zu dieser Mischung wurden 2,47 g (5,82 mmol) N,N,N',N'-Tetrakis(2-pyridylmethyl)-ethylendiamin gegeben. Man erhielt eine gelbe Lösung mit einem pH-Wert von 8,8. Dann wurden 0,96 g (3,6 mmol) Mangantriacetat (Mn(OAc)₃·3H₂O) zugegeben. Die Lösung wurde braun und wies einen pH-Wert von 6,2 auf. Anschließend wurden 2 g (14,58 mmol) Natriumacetat zugegeben (pH 6,5), dann Perchlorsäure (55 Tropfen) zu einem pH-Wert von 5. Nach Zugabe von 3 g (24,48 mmol) Natriumperchlorat fiel bei pH 6,1 ein Niederschlag aus. Die Reaktionsmischung wurde 4 Stunden lang gewährt. Die ausgefallenen Kristalle wurden abgefiltert und unter Stickstoff gefiltert. Man erhielt 3,08 g Rohprodukt der Verbindung (µ-Oxo) bis (µ-acetato)bis[N,N,N',N'-(2-pyridylmethyl-)ethylendiamin-]di-mangan-perchlorat.

1,15 g (0,823 mmol) dieser Verbindung wurden in 40 ml einer 1:1-Mischung aus Ethanol und Wasser gelöst. Nach einer halben Stunde wurden 4 ml Triethylamin zugegeben. Der pH-Wert der Reaktionsmischung betrug 11. Dann wurden 3,89 g (21,12 mmol) KPF₆ zugegeben. Nach 15 Minuten wurde die Reaktionsmischung filtriert, um unlösliches Mangandioxid abzutrennen. Aus dem Filtrat wurden die Lösemittel abdestilliert und der Rückstand mit Aceton behandelt, um auf diese Weise Restmengen an Mangandioxid abzutrennen, denn das gewünschte Komplexsalz ist im Gegensatz zu Mangandioxid gut in Aceton löslich. Nach Abtrennen des Mangandioxids wurde das Aceton destillativ abgetrennt. Man erhielt das oben genannte Komplexsalz in Form eines weißen Pulvers.

### Beispiel 3

### (µ-Oxo)bis(µ-butyrato)bis[N,N,N',N'-tetrakis(2-pyridylmethyl-)1,2-ethylendiamin]dimangan III,IV perchlorat

2,47g (5,82 mmol) N,N,N',N'-Tetrakis-(2-pyridylmethyl)-1,2-ethylendiamin wurden in 30 ml einer Mischung aus Ethanol und Wasser (5:1) gelöst und anschließend Mn(O Acetat)₃·2H₂O (0,96 g; 3,6 mmol) hinzugegeben. Dann wurde 2,2 g (20 mmol) Natriumbutyrat zugegeben und anschließend 2 ml HClO₄ (70 %ig). Es stellte sich ein pH-Wert von 7,5 ein. Dann wurden 3 g (24,48 mmol) NaClO₄ zugegeben und diese Mischung wurde 4 Stunden bei Raumtemperatur gerührt. Es bildete sich ein Niederschlag, der abfiltriert, mit einer Ethanol/Wasser-Mischung (85 % EtOH/15 % H₂O) gewaschen und getrocknet wurde. Rohausbeute 2,3 g. Der Feststoff wurde mit 70 ml Aceton behandelt und die Aceton-Lösung von den unlöslichen anorganischen Salzen abfiltriert. Nach Abdestillation des Acetons und Umkristallisation mit Ethanol/Wasser 5:1 erhielt man das oben genannte Komplexsalz.

| | | | | | |
|---|---|---|---|---|---|
| Analyse: | ber.: | Mn 7,5 % | C 49,17 % | H 4,95 % | N 11,47 % |
| | gef.: | Mn 8,0 % | C 44,8 % | H 4,5 % | N 12,1 % |

### Beispiel 4

### Bis(µ-oxo)bis[N,N,N',N'-tetrakis(2-pyridylmethyl-)1,2-ethylendiamin]dimangan III,IV perchlorat

0,425 g (1 mmol) N,N,N',N'-tetrakis-(2-pyridylmethyl)-1,2-ethylendiamin und 0,198 g (1 mmol) MnCl₂·4H₂O wurden in 6 ml Wasser gelöst. Die Lösung wurde 30 Minuten bei Raumtemperatur gerührt. Dann wurden 4 Tropfen H₂O₂ zugegeben und eine Stunde bei Raumtemperatur gerührt. Dann wurden 0,13 g (1 mmol) NaClO₄ zugegeben und 3,5 Stunden bei Raumtemperatur gerührt. Das ausgefallene Mangan-Komplexsalz wurde abfiltriert und mit einer 1-molaren NaClO₄-Lösung gewaschen.

| | | | | | | |
|---|---|---|---|---|---|---|
| Analyse: | ber.: | Mn 8,4 % | C 47,77 % | H 4,47 % | Cl 8,14 % | N 12,86 % |
| | gef.: | Mn 8,4 % | C 45,1 % | H 4,3 % | Cl 8,6 % | N 11,9 % |

Der in den vorherigen Beispielen benutzte Ligand N,N,N',N'-Tetrakis-(2-pyridylmethyl)ethylendiamin wurde entsprechend den Angaben in Synthesis, 1992, S. 539 hergestellt.

## Patentansprüche

1. Bis- und Tris-(µ-oxo)-di-Mangan-Komplexsalze der Formel I
[LMn(µ-O)ₐ(µ-OAc)_{b}MnL]^{x}A_{y} (I)
worin
Ac eine C₂-C₈-Acylgruppe ist,
a ist 1, 2 oder 3,
b ist 0, wenn a 2 oder 3 ist oder b ist 2, wenn a 1 ist,
x bezeichnet die Anzahl der positiven Ladungen und ist 2 oder 3,
A ist ein ein- oder zweifach negativ geladenes Anion,
y bedeutet die für den Ausgleich der positiven Ladungen erforderliche equivalente Menge an Anion A und
L bedeutet einen Liganden der Formel II oder III 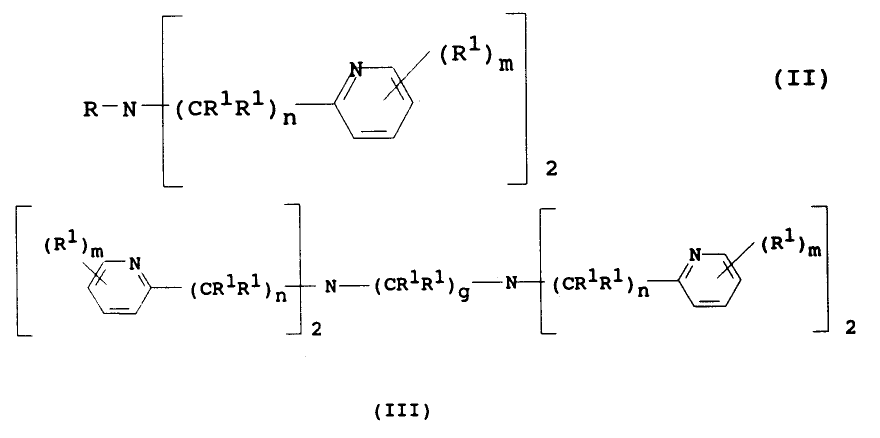
worin R C₁-C₁₂-Alkyl, C₅-C₁₀-Cycloalkyl, Phenyl, NH₂, NHR², N(R²)₂, OH, OR² oder COOH, R¹ Wasserstoff, C₁-C₁₂-Alkyl, C₅-C₁₀-Cycloalkyl, NH₂, NHR², N(R²)₂, OH, OR², COOH, COOR², Cl, Br, F, J oder CN, R² C₁-C₁₂-Alkyl oder C₅-C₁₀-Cycloalkyl bedeuten, g 2 oder 3 und m und n Null oder eine ganze Zahl von 1 bis 4 ist.

2. Mangan-Komplexsalze der Formel I nach Anspruch 1, dadurch gekennzeichnet, daß L einen Liganden der Formel II oder III darstellt, worin R¹ Wasserstoff bedeutet.

3. Mangan-Komplexsalze der Formel I nach Anspruch 1, dadurch gekennzeichnet, daß L einen Liganden der Formel II darstellt, worin R C₁-C₄-Alkyl bedeutet.

4. Verwendung der Mangan-Komplexsalze der Formel I nach Anspruch 1 als Katalysatoren für die Oxidation von organischen Verbindungen.

5. Verwendung der Mangan-Komplexsalze der Formel I nach Anspruch 1 als Katalysatoren in oxidativen Bleichmitteln.
